# EUROPEAN PATENT APPLICATION

(11) **EP 3 739 406 A1**
(43) Date of publication of application: **18.11.2020**
(21) Application number: 20175091.6
(22) Date of filing: 15.05.2020
(51) Int. Cl.: G05B 19/406, G05B 23/02

(54) **METHOD TO MONITOR AND/OR HANDLE THE OPERATION OF AN OPERATOR DEVICE FOR A MACHINE TOOL**

(30) Priority: 17.05.2019 IT 201900006951
(71) Applicant: HSD S.p.A., 61100 Pesaro (PU) (IT)
(72) Inventor: GALLI, Paolo Giuseppe Fulvio, 61100 Pesaro (PU) (IT); BENEDETTINI, Stefano, 61100 Pesaro (PU) (IT)
(74) Representative: Manconi, Stefano

(57) **Abstract**

A method to monitor and/or handle the operation of an operator device for a machine tool, having sensors (6) to measure quantities concerning the operation of the operator device (1) and an electronic control unit (7), which comprises a control unit (13) configured to obtain operation data (DS) of the operator device (1) based on the measured quantities, a memory (15) for storing configuration parameters (PS) and the operation data (DS), and a wireless communication module (16) to make available, in a communication network (16; 23, 18, 11; 24, 18, 11), the configuration parameters (PS) and the operation data (DS); wherein the communication device (17) connects to the communication network (16; 23, 18; 24, 18, 11); displays a menu of functions that are selectable concerning the monitoring of the operator device (1) and acquires at least one sub-set of operation data (DS) and/or changes at least one of the configuration parameters (PS) based on the function selected by the user and executes a selected function.

## Description

### CROSS-REFERENCE TO RELATED APPLICATIONS

This patent application claims priority from Italian patent application no. 102019000006951 filed on 17/05/2019.

### TECHNICAL FIELD

This invention concerns a method to monitor and/or handle the operation of an operator device for a machine tool.

In particular, this invention finds advantageous, but not exclusive, application in machine tools for the machining of wood and derivatives, stone, glass, metals, composite or plastic materials in general, comprising one or more operating devices, for example a birotative head, which comprises a head with two independent rotative axes and a respective electrospindle, or a drilling head, which comprises a plurality of spindles, or a single electrospindle, to which the following description will make explicit reference without any loss of generality thereby.

### BACKGROUND ART

Normally a machine tool for the machining of a material such as wood, stone, glass, metals, composite or plastic materials in general comprises one or more operating devices on board that are designed to machine the material, such as, for example, simple electrospindles provided with their respective tools, birotative heads, or drilling heads, and a computer numerical control unit. The most advanced operator devices are equipped with sensors and control electronics. The computer numerical control unit of the machine tool is interfaced with the control electronics of the operator devices to collect relative operation data and to enable the operator devices to be monitored.

However, the operation data of the operator devices are raw and difficult to interpret for a machine tool user and the computer numerical control units normally lack a graphical interface to facilitate the interpretation of such operation data, mainly for cost reasons.

In addition, the configuration parameters of an operator device can be set by connecting it to a piece of dedicated configuration equipment that communicates directly with the control electronics, in case the operator device has to be disconnected from the machine tool, e.g. for maintenance, or from the computer numerical control unit, which has to be specially configured by the machine tool manufacturer with a specific software procedure.

The US patent application published under US2018/0159937A1 describes a system for real-time monitoring of a machine tool. The system comprises a transceiver module built into the numerical control unit of the machine tool to connect the machine tool to the internet via a router and a wireless access point to allow the staff in charge to access the transceiver module both from company buildings and outside the company in order to obtain real-time information on machine tool operation parameters via a mobile personal communication device, such as a commercial smartphone, in order to monitor the operation and use of machine tool tools. The transceiver module incorporates an app-server or web-server that allows you to obtain and display information through a specific application (app) installed on the smartphone of the staff in charge.

The European patent application published under number EP3001265A1 describes a self-learning method applied to a machine tool for analysing machining tool operating data in order to obtain a prediction of damage to machine tools and to plan the repair thereof. According to this method, a web-server collects machine tool operation data acquired by a sensor installed on the machine tool. An aggregate of processing programs, designed to process machine tool operation data, are provided by a centralised server and are accessible by an operator via a standard computer or mobile communication device.

The US patent application published under US2017/0269811A1 describes a control panel for a machine tool that neatly groups the machine tool procedures that can be selected on a plurality of screens and sub-screens so that even an unqualified person can select the correct procedure. The control panel is either integrated into the machine tool or arranged in a separate position from the machine tool and connected to the machine tool via a network line.

### DISCLOSURE OF INVENTION

The purpose of this invention is to compensate for the difficulty in interpreting the operation data of an operator device or in configuring an operator device to exploit the potential of new operator devices mounted on the machine tools themselves, in a simple and cost-effective way.

In accordance with this invention, a method to monitor and/or handle the operation of an operator device for a machine tool, a computer program, and an operator assembly, as defined in the attached claims, are provided.

### BRIEF DESCRIPTION OF THE DRAWINGS

This invention will now be described with reference to the accompanying drawings, which illustrate a non-limiting embodiment thereof, wherein:
- Figure 1 illustrates, according to a lateral view with parts removed for clarity, an operator device for a machine tool; and
- Figure 2 illustrates a block diagram of a system for collecting machine tool operation data, this system being partly mounted on the operator device in Figure 1 and implementing the method of the invention to monitor and/or handle the operation of the operator device in Figure 1.

### BEST MODE FOR CARRYING OUT THE INVENTION

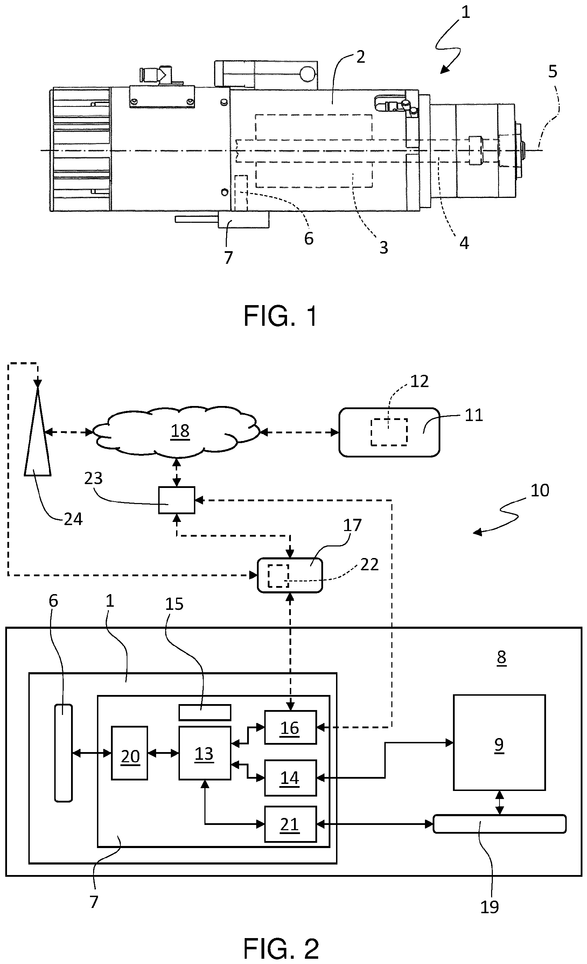

In Figure 1, the reference number 1 generally designates, as a whole, an electrospindle comprising an outer casing 2, which internally houses an electric motor 3 that is provided with an output shaft 4 rotating with respect to an axis 5. The output shaft 4 is in turn provided with a coupling member - known and not illustrated - to fit a tool on the output shaft 4, this tool also being known and not illustrated.

The electrospindle 1 is part of a known machine tool (not illustrated in Figure 1), e.g. a machine tool for processing a material such as wood and its derivatives, stone, glass, metals, composite materials, or plastics in general.

The electrospindle 1 comprises one or more sensors 6 housed within the outer casing 2 and designed to measure one or more quantities concerning the operation of the electrospindle 1, and an electronic control unit 7 mounted on the outer casing 2, inside or outside the latter.

According to one embodiment not shown, the sensors 6 are mounted outside or some inside and others outside the outer casing 2.

In Figure 2, the reference number 10 designates, as a whole, a system for collecting operation data concerning the electrospindle 1 and a machine tool, the latter being schematically illustrated with a block designated with the number 8 and comprises a computer numerical control unit 9 and the electrospindle 1 provided with sensors 6.

The system 10 comprises a server 11 and the electronic control unit 7 of the electrospindle 1. The server 11 is remotely accessible via the internet 18 and comprises a database 12 wherein operation data of the electrospindle 1 and machine tool 8 can be stored.

The electronic control unit 7 comprises: a processing and control unit 13, comprising for example a microprocessor; a wired machine interface device 14, for example a so-called fieldbus, or a wireless device, to connect the processing and control unit 13 communicatively to the computer numerical control unit 9 of the machine tool 8 in order to acquire machine tool 8 operation data; a memory module 15 to store machine tool 8 operation data at least temporarily; and a wireless communication module 16, which comprises, for example, a Wi-Fi module or a Bluetooth module, or both, to transmit said operation data to the server 11 or to a communication device 17, which, in turn, is connected communicatively and wirelessly to the server 11.

The communication device 17 is mobile and consists, for example, of a smartphone, smartwatch, tablet computer, or laptop computer, or is fixed and consists, for example, of a desktop computer. Therefore, the communication device 17 comprises a memory, a processing unit, a graphic display, and a wireless communication module, which are technical features that are known and therefore not illustrated. For example, the wireless communication module of the communication device 17 consists of a Wi-Fi module. Optionally, the communication device 17 comprises a data communication module for a cellular network, for example a 3G or 4G communication module.

The communication device 17 is preferably mobile.

The memory module 15 stores, moreover, a firmware that can be loaded onto the processing and control unit 13 and designed to perform the processing and control functions of the electronic control unit 7. The firmware comprises corresponding configuration parameters PS, which are also stored in the memory module 15 and can be changed to configure the electrospindle 1 as desired.

The operation data of the machine tool 8, indicated hereinafter as a whole with DM, comprise values of quantities measured directly by one or more known sensors mounted on the machine tool 8 and designated, as a whole, with the reference number 19 in Figure 2, and quantity or variable values derived from the measured quantities. More specifically, the quantities or variables monitored through the sensors 19 are selected from a group consisting of:
- machine tool operating states 8, such as setup state, emergency state, work state (i.e. when the machine is performing a certain task for which it is designed), maintenance state, operating state of the main and auxiliary members (pumps, servomotors, cooling systems) of the machine tool 8;
- duration of stay in the operating states of the machine tool;
- temperature, current absorption, and vibrations of the machine tool 8.

The electronic control unit 7 also comprises an analogue, digital, magnetic, or optical sensor interface device 20 for connecting the sensors 6 to the processing and control unit 13.

The processing and control unit 13 is configured to obtain operation data of the electrospindle 1 based on the measured quantities from the sensors 6. In particular, the operation data of the electrospindle 1, designated as a whole hereinafter with DS, comprise values of quantities measured directly from the sensors 6 and values of quantities or variables derived from the measured quantities. The quantities or variables measured or monitored by the processing and control unit 13, with the aid of the sensors 6, are selected from a group consisting of:
- instantaneous temperature and maximum temperature of the electrospindle 1 in general or of various parts of the electrospindle 1, such as the stator, front and rear bearings, inflow and outflow of the coolant if used, rotor, motor shaft, electronic board;
- ambient temperature, ambient humidity and atmospheric pressure;
- quantities or events indicative of the operating status of parts of the electrospindle 1, such as bearing wear, rotor cage breakages, air gap operating anomalies, stator insulation leakages;
- operating status of each electric or electronic apparatus of the electrospindle 1;
- quantities concerning the electric operation of the electrospindle 1, such as current absorbed by the electric motor 3, frequency of operation of the electric motor 3, supply voltage of the electric motor 3, phase shift supply voltage, torque delivered, power delivered, power dissipated and instantaneous output;
- quantities concerning the mechanical operation of the electrospindle 1, such as instantaneous speed, maximum speed, instantaneous acceleration and maximum acceleration of the output shaft 4, vibrations of the electrospindle 1, acceleration of the electrospindle 1 in the three directions of advancement, position of the coupling member along and/or around the axis 5 itself, quality of the coupling between the tool and the coupling member, flow rate of the coolant (if the electrospindle 1 is fluid-cooled), tool coupling force, static and dynamic forces, bearing pre-load, mass of the tools coupled to the electrospindle 1, geometrical variations of components, e.g. elongations, position and movements of bodies, e.g. a tie rod; and
- statistics on the operation of the electrospindle 1, such as, for example, total operating time, operating time at various speeds, number of ignitions, number of tool changes, tool blocking and unblocking times.

The configuration parameters PS comprise comparison thresholds for some of the quantities or variables that are measured or monitored by the processing and control unit 13, with the aid of the sensors 6 described above.

The operation data DS are stored at least temporarily in the memory module 15 and are also transmitted to the server 11 or to the communication device 17. In addition or alternatively, the operation data DS are transmitted to the computer numerical control unit 9 via the interface device 14.

Optionally, the electronic control unit 7 comprises an additional sensor interface device 21 for connecting the sensors 19 to the processing and control unit 13. In this way, the electronic control unit 7 can acquire at least part of the operation data DM directly from the sensors 19, without going through the computer numerical control unit 9, or partly from the sensors 19 and partly from the computer numerical control unit 9.

According to another embodiment not illustrated, the processing and control unit 13 acquires the operation data DM via the wireless communication module 16. For this purpose, the computer numerical control unit 9 is also provided with a wireless communication module.

According to another embodiment not illustrated, the processing and control unit 13 is configured to autonomously determine some operation data DM as a function of the operation data DS obtained by means of the sensors 6, i.e. without the aid of the sensors 19 and of the sensor interface device 21, or without the aid of the computer numerical control unit 9 and of the machine interface device 14. This is made possible by the fact that the electrospindle 1 is part of the machine tool 8, i.e. it is mounted fixed or mobile on a frame (not illustrated) of the machine tool 8, and, therefore, the operation data DS obtained via the sensors 6 are affected by the mechanical and electrical behaviour of the machine tool 8.

For this purpose, the processing and control unit 13 is configured to implement at least one appropriate calculation algorithm, e.g. based on the neural networks or artificial intelligence, designed to process the operation data DS so as to estimate the values of one or more quantities or variables selected from a group consisting of:
- machine tool operating states 8, such as machine standstill, machine running empty, and machine processing a piece;
- duration of the above-mentioned operating states of the machine tool;
- the operating state (stationary or moving) of the moving members of the main axes of the machine tool 8; and
- anomalous vibrations of the machine tool 8.

Therefore, the wireless communication module 16 of the electronic control unit 7 of the electrospindle 1 makes it possible to provide, in a communication network, the operation data DS and the configuration parameters PS of the electrospindle 1 and, optionally, also the operation data regarding the machine tool 8.

According to this invention, a computer program is paired with the electrospindle 1, the former consisting of, in particular, a software application, designated with 22 in Figure 2, which can be loaded onto the memory of the communication device 17 and designed to implement, when run on the processing unit of the communication device 17, a method to monitor and/or handle the operation of the operator device 1 described hereinafter.

The software application 22 requires that the communication device 17 connects to the communication network wirelessly, i.e. using its own wireless communication module, or using its own 3G or 4G data communication module.

In an initial connection mode, the wireless communication module 16 is configured to function as a wireless access point for the communication network so that the communication device 17 can directly connect to the wireless communication module 16. In other words, in the initial connection mode, the communication network is defined by the wireless communication module 16.

In a second connection mode, the communication network comprises a wireless router, designated with 23 in Figure 2, which functions as a wireless access point and which is connected to the internet 18. The wireless router 23 is positioned, for example, in a location wherein the machine tool 8 is present. The wireless communication module 16 is configured to communicatively connect to the wireless access point 23, the processing and control unit 13 is configured to transmit the operation data DS and the configuration parameters PS to the server 11 through this wireless access point 23 and the communication device 17 communicatively connects to the wireless access point 23. In other words, the communication network comprises the wireless router 23, the internet 18, and the server 11.

In a third connection mode, the communication network comprises a cellular network, indicated with 24 in Figure 2, and the internet 18, and the server 11. The third connection mode differs from the second connection mode in that the communication device 17 communicatively connects to the cellular network 24.

Typically, the wireless router 23 acts as a wireless access point with Wi-Fi technology. In this case, the wireless communication module 16 consists of a Wi-Fi module. In other words, to function in accordance with the above-mentioned second and third communication modes, the wireless communication module 16 consists of a Wi-Fi module, while to function in accordance with the above-mentioned initial connection mode, the wireless communication module 16 comprises a Wi-Fi module, or a Bluetooth module, or both.

The software application 22 implements a graphical user interface that enables the communication device 17 to display a menu listing a plurality of functions that regard the monitoring and/or management of the operator device 1 and can be selected by a user.

At this point, through the communication network, the communication device 17 acquires at least a sub-set of operation data DS and/or changes at least one of the configuration parameters PS based on the selection made by the user and executes the function selected.

The functions listed through the graphical user interface comprise at least one function selected from a group consisting of:
- a function F1 to display instructions to guide the user to a calibration of the operator device 1;
- a function F2 to update the firmware;
- a function F3 to set or change at least one of the configuration parameters PS;
- a function F4 to automatically perform the search for an anomalous situation, for example a fault, based on the operation data DS and to display information on suggested actions to be taken to resolve the anomalous situation;
- a function F5 to display instructions to guide the user to the search for a cause of an anomalous situation, for example a fault, based on the operation data DS;
- a function F6 to detect the wear of the tool fitted to the electrospindle 1, based on the operation data DS;
- a function F7 to display the temporal trend of at least one of the quantities or variables that can be monitored via the sensors 6, i.e. a kind of "oscilloscope" function displayed on the graphic display of the communication device 17;
- a function F8 to display statistics concerning at least one of the above-mentioned quantities and/or variables;
- a function F9 to display anomalous situations determined on the basis of at least one of the above-mentioned quantities or variables, for example when the corresponding thresholds, which are part of the configuration parameters PS, are exceeded;
- a function F10 to sample at least one of the above-mentioned quantities at a given sampling rate and for a given time interval.

Therefore, the electrospindle 1 provided with the electronic control unit 7 functions as a data collection "hub" to collect operation data of the machine tool 8 and operation data of the electrospindle 1. In this way, it is possible to collect all the operation data and transmit them to a remote server 11 without needing to update, change, or substitute the computer numerical control unit 9. In addition, the replacement of a, so to say, standard-type electrospindle with the electrospindle 1 in any machine tool enables the latter to be communicatively connected to the remote server 11 for the collection of operation data.

The software application 22 installed on a common communication device 17, makes it possible for a user of the machine tool 8 to exploit, in a quick and easily understood manner, the operation data of the electrospindle 1 collected by the electrospindle 7 with the aid of the sensors 6. The software application 22 makes it possible to monitor the electrospindle 1 during its operation and, thus, enables the user to detect anomalous situations, and basically in real time, and, in any case, before they may provoke serious damage to the electrospindle 1. Thanks to the machine interface device 14 and/or the sensor interface device 21, the software application 22 also allows the user of the machine tool 8 to exploit, in a quick and easily understood manner, the operation data DM concerning the machine tool 8, collected and/or determined independently by the electronic control unit 7 in the ways described above.

In addition, the software application 22 is relatively easy and inexpensive to design, as you can take advantage of comprehensive libraries of functions provided by any of the most popular operating systems on the market today, such as Microsoft Windows, Android, and iOS, with which the communication device 17 can be equipped. Finally, the software application 22 facilitates the monitoring of several electrospindles 1 mounted in various parts of a machine tool. The assembly formed by one or more electrospindles 1 and the software application 22 can be considered as an operator assembly by the operation that can be easily monitored by any user equipped with a communication device 17.

The software application 22 allows you to quickly configure the wireless communication module 16 to connect to the wireless access point 23, i.e. it allows you to enter the parameters of the wireless access point 23 without having to directly configure the electronic control unit 7 of the electrospindle 1 already installed on the machine tool 8 or implement a specific configuration procedure on the computer numerical control unit 9.

It should be noted that the invention described above is applicable to any operator device or component that can be installed on a machine tool, such as a drilling head, or a birotative head, or a single electrospindle.

In other words, the above-mentioned data collection hub generally consists of an operator device that comprises the electronic control unit 7 and, optionally, at least one spindle or at least one electrospindle 1.

## Claims

1. A method to monitor and/or handle the operation of an operator device for a machine tool, the operator device (1) comprising sensor means (6) to measure quantities concerning the operation of the operator device (1) and an electronic control unit (7), which comprises processing and controlling means (13) configured to obtain operation data (DS) of the operator device (1) based on the measured quantities, memory means (15) to store a firmware and relative configuration parameters (PS) and said operation data (DS), and first wireless communication means (16) to make available, in a communication network (16; 23, 18, 11; 24, 18, 11), said configuration parameters (PS) and said operation data (DS); the method comprising:
- connecting to said communication network (16; 23, 18; 24, 18, 11) by a communication device (17), preferably consisting of a mobile communication device;
- displaying a menu listing a plurality of functions, which concern the monitoring and/or the handling of the operator device (1) and are selectable by a user, by the communication device (17), through a graphical user interface thereof; and
- acquiring at least one sub-set of operation data (DS) and/or changing at least one of said configuration parameters (PS) based on the selection made by the user and executing a selected function, by the communication device (17), through the communication network (16; 23, 18, 11; 24, 18, 11) .

2. The method according to claim 1, wherein said plurality of functions comprises at least one function selected within a group consisting of:
- a first function (F1) to display instructions to guide said user to a calibration of the operator device (1);
- a second function (F2) to update said firmware; and
- a third function (F3) to set or change at least one of said configuration parameters (PS).

3. The method according to claim 1 or 2, wherein said operation data (DS) comprise values of said measured quantities and said plurality of functions comprises at least one function selected within a group consisting of:
- a fourth function (F4) to automatically perform a search for an anomalous situation, for example a fault, based on said operation data (DS) and to display information on suggested actions to be taken to solve the anomalous situation;
- a fifth function (F5) to display instructions to guide said user to a search for a cause of an anomalous situation, for example a fault, based on said operation data (DS); and
- a sixth function (F6) to detect the wear of a tool that can be fitted on an output shaft (4) of said operator device (1), based on said operation data (DS).

4. The method according to any one of the claims from 1 to 3, wherein said operation data (DS) comprise values of said measured quantities and/or values of variables derived from said measured quantities, and said configuration parameters (PS) comprise comparison thresholds for some of said measured quantities and/or said derived variables; said plurality of functions comprising at least one function selected within a group consisting of:
- a seventh function (F7) to display the temporal trend of at least one of said measured quantities and/or of said derived variables;
- an eighth function (F8) to display statistics concerning at least one of said measured quantities and/or of said derived variables;
- a ninth function (F9) to display anomalous situations determined based on at least one of said measured quantities and/or of said derived variables, for example on the basis of corresponding comparison thresholds being exceeded; and
- a tenth function (F10) to sample at least one of said measurable quantities at a given sampling rate and for a given time interval.

5. The method according to any one of the claims from 1 to 4, wherein said first wireless communication means (16) are configured to act like a first wireless access point, thus defining said communication network, and said communication device (17) communicatively connects to said first wireless access point.

6. The method according to any one of the claims from 1 to 5, wherein said communication network (23, 18, 11) comprises a second wireless access point (23), said first wireless communication means (16) are configured to communicatively connect to said second wireless access point (23), said processing and controlling means (13) are configured to transmit, through said second wireless access point (23), said operation data (DS) and said configuration parameters to a remote server (11) comprising a database (12), and the communication device (17) communicatively connects to said second wireless access point (23).

7. The method according to any one of the claims from 1 to 6, wherein said operator device comprises at least one spindle or at least one electrospindle (1), or at least one birotative head, or at least one drilling head.

8. The method according to any one of the claims from 1 to 7, wherein said communication device (17) consists of a smartphone or a smartwatch or a tablet computer or a laptop computer or a desktop computer.

9. The method according to any one of the claims from 1 to 8, wherein said first wireless communication means (16) comprise a Wi-Fi module.

10. The method according to any one of the claims from 1 to 8, wherein said first wireless communication means (16) comprise a Bluetooth module.

11. A computer program product, which can be loaded in the memory means of a communication device (17) comprising processing means and second wireless communication means and is designed to implement, when executed by said processing means, the method according to any one of the claims from 1 to 10.

12. An operator assembly for a machine tool, the operator assembly comprising at least one operator device (1) for the machine tool (8), the operator device (1) comprising sensor means (6) to measure quantities concerning the operation of the operator device (1) and an electronic control unit (7), which comprises processing and controlling means (13) configured to obtain operation data (DS) of the operator device (1) based on the measured quantities, memory means (15) to store firmware and relative configuration parameters (PS) and said operation data (DS), and first wireless communication means (16) to make available, in a communication network (16; 23, 18, 11; 24, 18, 24), said configuration parameters (PS) and said operation data (DS); the operator assembly further comprising a computer program product (22) according to claim 11.

13. The operator assembly according to claim 12, wherein said operator device comprises at least one spindle, or at least one electrospindle (1), or at least one birotative head, or at least one drilling head.
